# EUROPEAN PATENT SPECIFICATION

(11) **EP 3 928 308 B1**
(45) Date of publication and mention of the grant of the patent: **19.11.2025**
(21) Application number: 20759871.5
(22) Date of filing: 20.02.2020
(51) Int. Cl.: G09B 23/28, A47F 8/00, A63B 69/34, G09B 23/30, G09B 23/32, G09B 23/34, G01M 17/007, G01L 1/24

(54) **OPTICAL FIBER SYSTEM FOR DETECTING FORCES DURING A COLLISION TEST**
OPTISCHES FASERSYSTEM ZUR ERFASSUNG VON KRÄFTEN WÄHREND EINES KOLLISIONSTESTS
SYSTÈME DE FIBRE OPTIQUE PERMETTANT DE DÉTECTER DES FORCES PENDANT UN TEST DE COLLISION

(30) Priority: 20.02.2019 US 201962808050 P
(43) Date of publication of application: 29.12.2021
(73) Proprietor: Humanetics Innovative Solutions, Inc., Farmington Hills, MI 48335 (US)
(72) Inventor: RAMOS, Rogerio, Tadeu, Eastleigh, Hampshire SO53 4NH (GB); EMSLIE, Christopher, Hampshire SO51 6AP (GB)
(74) Representative: Murgitroyd & Company
(86) International application number: PCT/US2020/019042
(87) International publication number: WO 2020/172410

(56) References cited:
- WO-A1-2017/118949
- US-A1- 2018 128 600
- US-A1- 2018 128 600
- US-B1- 8 970 845
- US-B1- 8 970 845
- US-B2- 7 086 273
- US-B2- 9 355 575
- US-B2- 9 355 575
- MOE AMANZADEH ET AL: "Recent developments in fibre optic shape sensing", MEASUREMENT., vol. 128, 1 November 2018 (2018-11-01), GB, pages 119 - 137, XP055640767, ISSN: 0263-2241, DOI: 10.1016/j.measurement.2018.06.034

## Description

### BACKGROUND

### 1. Field of the Invention

The present invention relates generally to a system for detecting forces during a collision test using anthropomorphic test devices and, more particularly, to an optical fiber system for body parts of an anthropomorphic test device.

### 2. Description of the Related Art

Automotive, aviation, and other vehicle manufacturers conduct a wide variety of collision testing to measure the effects of a collision on a vehicle and its occupants. Through collision testing, a vehicle manufacturer gains valuable information that can be used to improve the vehicle.

Collision testing often involves the use of anthropomorphic test devices (ATD), commonly referred to as "crash test dummies." The ATD is formed from a plurality of body parts that are connected to one another to simulate a human body. Each of the body parts comprise many discrete components that are intended to represent the articulation of the human body. In other words, many of the body parts are able to move, twist, and bend in multiple directions and in different manners. During collision testing, the ATD is placed inside a vehicle and the vehicle undergoes a simulated collision (sled test) or physical collision. The collision exposes the ATD to high inertial loading, and sensors inside the ATD, such as accelerometers, strain gauges, and other sensors, generate electrical signals of data corresponding to the loading. Cables transmit these electrical signals of data to a data acquisition system (DAS) for subsequent processing. This data reveals information about the effects of the collision on the anthropomorphic test device and can be correlated to the effects a similar collision would have on a human occupant.

The movement and distortions of the ATD during a crash test have also been monitored visually using high speed cameras in the past. However, some tests cannot be monitored in this way because of the construction of the structure surrounding the ATD, the presence of other dummies, or the inflation of air bags. Also, the position or shape of individual body parts of the ATD may be difficult to estimate, such as limbs and internal organs. Simulated soft organs are particularly difficult to monitor using traditional strain gauges where it is difficult to measure strain of low Young modulus materials using high Young modulus sensing elements.

To develop skeletal structures, organs, or flesh of the ATD, it is necessary to create or form shapes and materials to adjust for various possible stiffness, which the human body can have in different regions or components. To adjust these components, it is only possible to do this by changing geometry of the body parts or the ATD or using different materials, and adjusting as close as possible to the material stiffness requirement. These systems are time consuming to setup and only represent certain aspects of the human body when subjected to forces.

The ATD is highly adjustable to allow for many different configurations. Thus, it is difficult to reposition the ATD into precisely the same position and orientation for subsequent tests. Cameras can be used to realign the ATD, but there is less certainty that the position and orientation is the same, especially for internal body parts, such as organs or bones, and body parts that are obstructed by other mounting hardware. If the position and orientation of the ATD differs between subsequent tests, the results may differ.

US 9 355 575 B2 discloses a chest band assembly for a crash test dummy including a chest band adapted to be disposed about a rib cage of the crash test dummy and a sensor cooperating with the chest band and the rib cage. The sensor is made of a carrier and a plurality of optical fibers bonded to the carrier, wherein each of the optical fibers has at least one sensor.

WO 2017/118949 A1 discloses a medical device, system, and method having a flexible shaft and a multi-core fiber within the flexible shaft. The multi-core fiber includes a plurality of optical cores dedicated for shape sensing sensors, and a plurality of optical cores dedicated for force sensing sensors. A medical device flexing structure assembly can comprise a multi-core fiber comprising a plurality of cores, and a flexing structure comprising at least one slot. Each of the plurality of cores can comprise a fiber Bragg grating, and the flexing structure can be configured to bend in response to a force imparted on the flexing structure.

US 8 970 845 B1 discloses a method and system for rendering the shape of a multi-core optical fiber or multi-fiber bundle in three-dimensional space in real time based on measured fiber strain data. Three optical fiber cores arc arranged in parallel at 120° intervals about a central axis. A series of longitudinally co-located strain sensor triplets, typically fiber Bragg gratings, are positioned along the length of each fiber at known intervals. A tunable laser interrogates the sensors to detect strain on the fiber cores. Software determines the strain magnitude (ΔL/L) for each fiber at a given triplet, but then applies beam theory to calculate curvature, beading angle and torsion of the fiber bundle, and from there it determines the shape of the fiber in s Cartesian coordinate system by solving a series of ordinary differential equations expanded from the Frenet-Serrat equations.

US 2018/0128600 A1, discloses a medical device utilizing an optical shape sensing system having an optical fiber with a plurality of cores for sensing a position and/or shape of the device.

XP55640767, "Recent Developments in fibre optics shape sensing" University of Queensland - 2018, Moe Amanzadeh, Saiied Aminossadati, Mehmet Kizil, Aleksandar Rakic generally discloses a fiber optic shape sensor that uses Fiber Bragg Grating sensors to measure a combination of parameters with a single fiber.

### SUMMARY

Accordingly, the present invention provides a system for detecting forces during a collision test according to claim 1.

The present invention further provides an anthropomorphic test device according to claim 6.

Further features of embodiments of the invention are defined in the accompanying claims.

One advantage of the present invention is that the optical fiber system utilizes a multi-core optical fiber that is positioned throughout specific body parts of the ATD. The optical fiber is also small and lightweight minimizing interference with the test. The optical fibers are typically formed of a silica based fiber which is very stable and provides repeatable test results. The use of optical fiber as sensing elements has also the advantage of having the electronics remote from the location of sensing. Another advantage is that the optical fiber is insensitive to electromagnetic noise in the environment.

The subject invention allows the ATD to be used in tests other than a crash or collision test, including the drops, parachuting, spacecraft launches, etc., that require precise positioning of the body parts before the test and subsequent tests to ensure repeatability of the test and accuracy of the test results. The precise positioning is aided by the plurality of cores, which provides additional positional data for the various body parts. The plurality of cores also increases the sensitivity of the optical fiber and the system as a whole.

One advantage of the new optical fiber system is that it measures stress, strain, and deformation of skeletal structures, organs, and flesh for the ATD to form components, which can vary in structure, material, and shape all at the same time. Yet another advantage of the present invention is that the biofidelity of ATDs in use today and in the future is improved due to better measurement of the structural strains, stress, and shapes due to the multi-core optical fiber. Still another advantage of the present invention is that the optical fiber system permits for better vehicle restraint evaluations to predict possible injury. Existing measurement systems rely on individual load cells placed within the ATD and the metal structure of the ATD inhibits the ability to take measurements with such load cells. The fiber optic measurement system can be routed through areas that current load cells cannot be placed. Further, the optical fibers are capable of being threaded through the metal structure to provide a complete analysis of the forces acting on the desired body part. Other existing systems rely on images taken by cameras at discrete points of impact which require substantial calculations and extrapolation to determine the forces. The subject invention overcomes these inaccuracies and provides measurements in real time.

Other features and advantages of the present invention will be readily appreciated, as the same becomes better understood, after reading the subsequent description taken in conjunction with the accompanying drawings.

### BRIEF DESCRIPTION OF THE DRAWINGS

Figure 1 is a side view of one embodiment of an optical fiber system, according to the present invention, having a plurality of body parts forming an anthropomorphic test (ATD) device with at least one optical fiber supported thereon shown in one suitable environment.
Figure 2A is a side perspective view of the optical fiber system positioned about a rib for the ATD.
Figure 2B is a top down view of the rib showing various stages of deformation while undergoing an impact.
Figure 3 is a partial cut away, perspective view of an optical fiber for use in the optical fiber system of the subject invention.
Figure 4 is a schematic view of the optical fiber in communication with a control box according to one embodiment of the subject invention
Figure 5 is a schematic view of the optical fiber according to one embodiment of the subject invention.
Figure 6 is an end view of another embodiment of an optical fiber for use with the subject invention.
Figure 7 is an end view of still another embodiment of an optical fiber for use with the subject invention.
Figure 8 is a perspective view of the fiber bundle shown in Figure 7.
Figure 9 is an end view of one embodiment of a fiber bundle of collocated optical fibers for use in the subject invention.
Figure 10 is a perspective view of the fiber bundle shown in Figure 9.
Figure 11 is a side view of one embodiment of a simulated head assembly for the ATD having the optical fiber system therein.
Figure 12 is a side view of another embodiment of the simulated head assembly for the ATD having the optical fiber system therein.
Figure 13 is a side view of a simulated bone structure having an optical fiber to detect deformation or shape thereof.
Figure 14 is a perspective view of another embodiment of an optical fiber system, according to the present invention.

### DETAILED DESCRIPTION

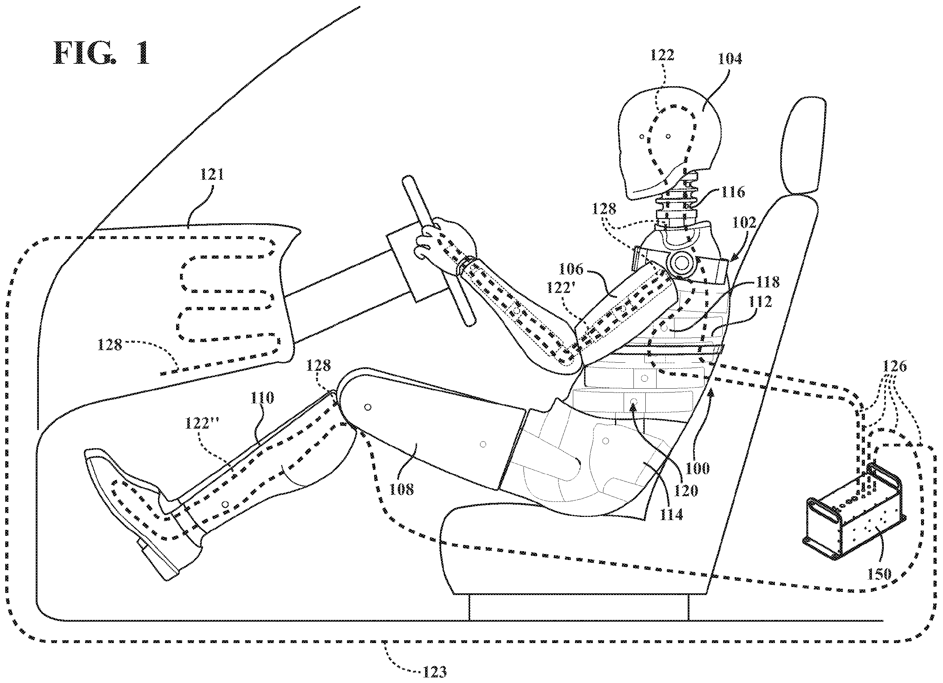

Referring to the drawings and in particular Figure 1, one embodiment of an optical fiber system 100, according to the present invention, is shown in operational relationship with an anthropomorphic test device (ATD), generally indicated at 102, in a vehicle for undergoing a collision test. The system 100 includes a plurality of body parts forming the anthropomorphic test device 102 and simulates at least a part of a human body. The body parts are capable of articulation to simulate a human body. The optical fiber system 100, according to the present invention, includes at least one optical fiber 122 extending between first and second end 126, 128. The optical fiber 122 is supported by and in contact with at least one of the ATD or the vehicle.

The anthropomorphic test device 102, in the example shown in Figure 1, is of a fiftieth percentile (50%) male type and is illustrated in a sitting position. It should be appreciated that the optical fiber system 100 can be used with all types of ATD 102. The system 100 can be used to sense shape or position of the body parts such that the position can be maintained or precisely realigned for subsequent tests.

In one embodiment, the system 100 is used primarily, but without limitation, to test the performance of interiors and systems for seat occupants that undergo an impact or a crash. In another embodiment, the optical fiber system 100 can be used to test a plurality of components forming a part of at least one of a vehicle and a testing stand. This can also include specifically testing the performance of automotive interiors and restraint systems for adult front and rear seat occupants. Referring to automotive interior components, this may include seats, restraints, consoles, steering columns, steering wheels or any interior component subject to impact. Other vehicles that can be tested include, but are not limited to, airplanes and the associated interior components, which may include seats, restraints, hull, head liners, seat trays and the like.

The size and weight of the ATD 102 is based on anthropometric studies, which are typically done separately by the following organizations, University of Michigan Transportation Research Institute (UMTRI), U.S. Military Anthropometry Survey (ANSUR), and Civilian American and European Surface Anthropometry Resource (CESAR). It should be appreciated that ranges of motions, centers of gravity, and segment masses simulate those of human subjects defined by the anthropometric data. The ATD 102 can also be used to test the force of impacts on a simulated human body directly in various testing stands, such as neck twist fixtures, chest impact fixtures, and the like. Similarly, the optical fiber 122 can be supported by and in contact with such testing stands to test impacts thereon.

Referring back to the ATD 102, the body parts typically include a rigid body part and a flexible body part. Rigid body parts of the ATD 102 are meant to mimic and/or simulate rigid body parts of a human body, such as bone. Flexible body parts are meant to mimic and/or simulate flexible body parts of the human body, such as flesh, muscle, tissue, organs, and the like. The ATD 102 combines rigid and flexible body parts to more accurately represent the human body. For example, an arm assembly includes the rigid body part corresponding to the bones and the flexible body part corresponding to the flesh, muscle, and tissue. Referring to the flexible body parts, it should be appreciated that various materials, such as a urethane or plastic can be used to form the flexible body parts for improved coupling with the rigid body parts of the anthropomorphic test device.

As shown generally in Figure 1, the ATD 102 includes a head assembly 104, a right and left arm assembly 106, a right and left upper leg assembly 108, a right and left lower leg assembly 110, a thorax assembly 112, and a pelvis assembly 114. An instrumentation core may be mounted within the various body parts and may be removable for access to the body part. It should be appreciated that the right and left assemblies are generally constructed in a similar manner. It is to be appreciated by one of ordinary skill in the art that the individual components forming the ATD 102 are well known and can be varied based on the particular ATD 102 without deviating from the subject invention.

Figure 1 also shows a neck assembly 116 that connects the head assembly 104 to the thorax assembly 112. The thorax assembly 112 also includes a spine assembly 118 having an upper end mounted to the head assembly 104 and a lower end extending into a torso area of the ATD 102. The thorax assembly 112 also includes a rib cage assembly 120 connected to the spine assembly 118. In Figure 1, one optical fiber 122 is disposed in the head assembly 104, another optical fiber 122' is disposed in the arm assembly 106, and still another optical fiber 122" is disposed in the lower leg assembly 110. Yet another optical fiber 123 is disposed in the interior component, such as a dashboard 121. The optical fiber 122 may mount directly to a surface of the body part or is embedded within the body part. It is to be appreciated that mounting can be achieved with adhesive, glue, tape, or the like. It is to be appreciated that embedding the optical fiber can be achieved by various methods as such as by molding or casting the body part around the optical fiber. It is also possible that the body part could be 3D printed about the optical fiber or vice versa.

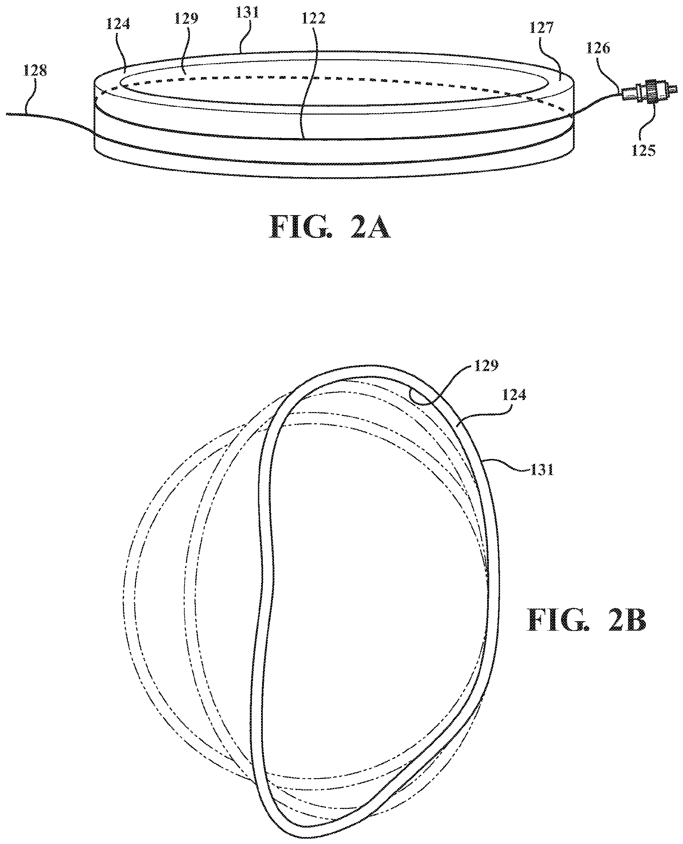

Referring to an embodiment shown in Figure 2A, the optical fiber 122 is wrapped around a rib 124. The optical fiber 122 includes a connector 125 mounted to the first end 126. Typically, the ATD includes at least one rib having a first component 127 with inner and outer surfaces 129, 131. However, the rib 124 can also be tested as a standalone body part to determine the response to various impacts. The optical fiber 122 directly contacts the rib 124 for sensing stain thereon. The first component 127 may be formed of a rigid material. Figure 2B is a top down view of the rib 124 of Figure 2A in various stages of deformation that can determined from the signals of the optical fiber 122.

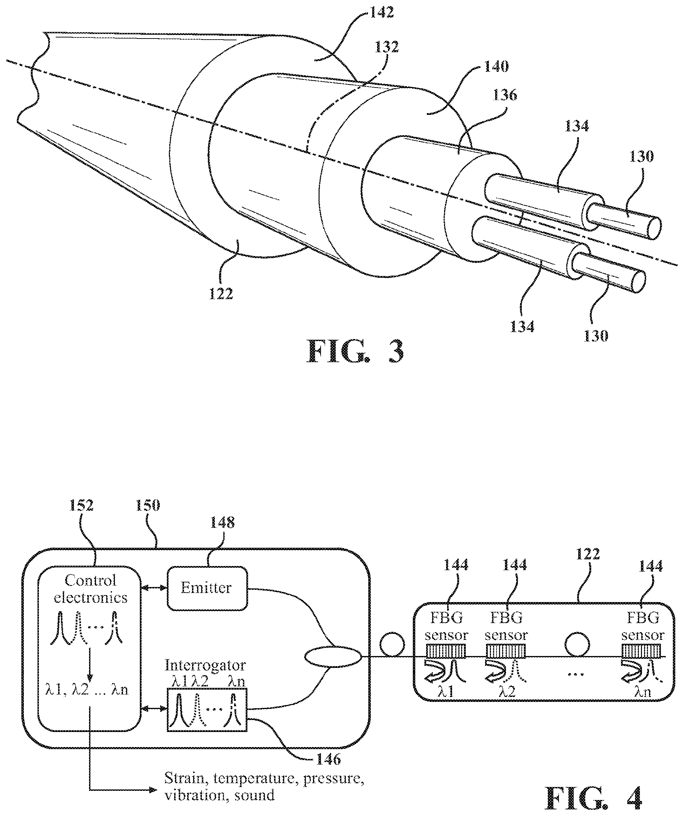

Referring to Figure 3, the optical fiber 122 has a plurality of cores 130, i.e. multiple cores 130 that extend between the first and the second end 126, 128 and are in a spaced and parallel relationship with one another. The optical fiber 122 further defines a longitudinally extending, fiber axis 132. The plurality of cores 130 may include one core located along the fiber axis, such as a central core, and other cores spaced from the central core, such as satellite cores. Alternatively, the plurality of cores 130 could include only the satellite cores. In this embodiment, each core 130 is surrounded by a cladding material 134 and two cores 130 extend parallel to one another and are spaced from the fiber axis 132. A coating material 136 surrounds the cladding material 134 to provide strength to the core 130 and cladding material 134. Optimally, although not necessarily, a strength member 140 and an outer jacket 142 may also surround the coating material 134 to provide additional strength to the optical fiber 122. However, it is to be appreciated that the various layers may depend on the configuration of the plurality of cores 130.

A schematic view of the system 100 is shown in Figure 4 in communication with one of the cores 130. Each of cores 130 has a plurality of grating sensors 144 inscribed integrally therein with the sensors 144 spaced along a length between the first and the second ends 126, 128. It is to be appreciated by one of ordinary skill that the grating sensors 144 are generally a longitudinal variation in the refractive index of the core 130. The number of grating sensors 144 can be selected based on the particular body part. For example, the optical fiber 122 can have from 7 to 25 sensors 144 disposed between the ends. Other embodiments can have up to 100 sensors 144 per core 130. The sensors 144 may be located near joints, such as elbow, hip, shoulder, knee, or ankle joint. For certain body parts, the sensors 144 may be disposed equidistance from one another along the optical fiber 122 and about the body part. For other body parts, the sensors 144 may be more closely located to one another. The spacing of the grating sensors 144 determine the particular wavelength that will be reflected by the grating sensor 144. It is well known that each grating sensor 144 has its own period and thereby its own unique reflection wavelength, so that each sensor can be distinguished by the detected reflection.

The system 100 includes an interrogator 146 communicating with the optical fiber 122 and an emitter 148 in communication with the optical fiber 122 for emitting a light having a predetermined band of wavelengths through the optical fiber 122 that is reflected by the sensors 144. The interrogator 146 and emitter 148 send out light in different wavelengths in this band so that it covers a wide spectrum. The light propagates through the optical fiber, is reflected at some point by the sensors 144 and returns to the interrogator 146. The sensors 144 have different periods so it is possible to distinguish between the signals of different sensors. The actual strain and, in turn, the stress on the body part can be deduced from the light signals which return from the sensors 144. The detection of strain could be provided by Fiber Bragg Gratings (FBGs), Brillouin scattering, Rayleigh scattering, interferometers, or any other optical technique as is known to those of skill in the art. Although the grating sensors 144 are described as integral with the optical fiber 122, it is to be understood by one of ordinary skill in the art that optical time domain reflectometry (OTDR) could be used with Brillouin or Rayleigh scattering to achieve the subject invention by using a time of pulse to determine the location of the strain.

The subject invention may enclose the interrogator 146 and the emitter 148 within a control box (shown generally at 150 in Figures 1 and 2). The control box 150 may also house a controller 152. A suitable control box 150, emitter 148, and interrogator 146 are disclosed in copending Application PCT/US19/14878, filed January 24, 2019. As one example, the emitter 148 emits the light having a predetermined band wavelength that is from 50 to 450 nanometers. In one embodiment, the wavelength band can be in the range of 1510-1595 nanometers. In another embodiment, the wavelength band can be in the range of 1275-1345 nanometers. In still another embodiment, the wavelength band can be in the range of 780-850 nanometers. It is also possible that the wavelength band is suitable for red diode lasers. It is to be appreciated that these wavelength bands are exemplary and are not intended to limit the subject invention.

The control box 150 is coupled to the optical fiber 122 and the light from the emitter 148 is reflected by the sensors 144. The reflected light can be used to determine the forces, such as strain, experienced by the optical fiber 122 and ultimately determine the amount of deformation to the body part. In other words, when the optical fiber 122 is placed on the body part in an initial condition, the sensors 144 reflect a certain pattern of the light. When forces are applied to the body part, the optical fiber 122 is subjected to stress or strain which causes the sensors 144 to undergo a change, such as by expanding or contracting. Expanding or contracting the sensors 144 change the reflected light pattern. As one example, the changes in the reflected light pattern are detected, which can then be compared to known changes to determine the amount of movement or deformation of the body part. The forces that are applied may deform the body part and/or the optical fiber 122. The forces may also include changes within the environment, such as temperature or pressure, which may cause changes to the optical fiber 122 sufficient to alter the reflected light pattern. However, in collisions tests, the subject invention undergoes significant deformation in a very short time span, i.e. in an impact simulation. The deformation causes significant strain on the optical fiber 122 resulting in areas that are stretched and others that are compressed. Further, the system 100 undergoes repeated deformations.

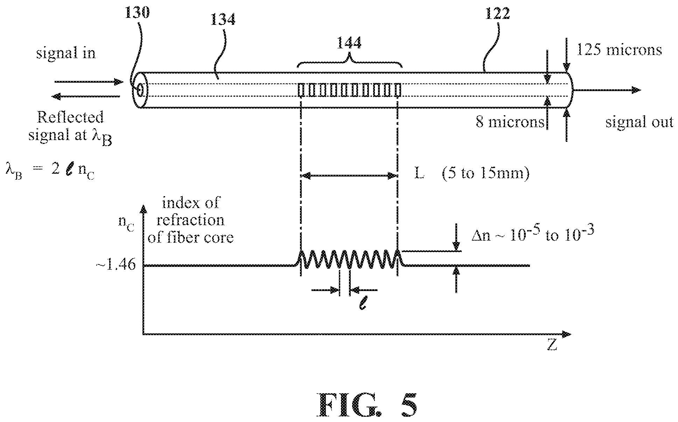

Referring to Figure 5, another schematic view of one of the optical fibers 122 and the sensor 144 are shown having light directed down the core 130 that is reflected by the Fiber Bragg Grating as is understood by those of ordinary skill in the art. The sensor 144 has a length L and the light has a wavelength l. The core 130 has an index of refraction, nc that is selected for the particular application. It is well known to one of ordinary skill in the optical fiber arts to correlate the reflected light from the sensor 144 using the wavelength l, length L, and index of refraction nc. The optical fiber 122 may have a diameter of from 30 to 1000 microns. In one embodiment, the optical fiber 122 has a diameter of from 100 to 300 microns. Each of the cores 130 may have a same diameter or different diameters. In one embodiment of the system 100, each of said cores 130 has a diameter of from 2 to 900 microns. In another embodiment, each of the cores has a diameter of from 2-300 microns. Alternatively, the core 130 would typically have a diameter of less than 30 microns, and particularly from 5-20 microns. One preferred optical fiber 122 has a core 130 with a diameter of about 8 microns. The cladding material 134 is typically about 75-200 microns and particularly from 100-150 microns. In another embodiment, the optical fiber 122 has a diameter of from 100 to 200 microns. The optical fiber 122 can be sized for the particular body part. One common diameter for the optical fiber 122 is about 75-150 microns.

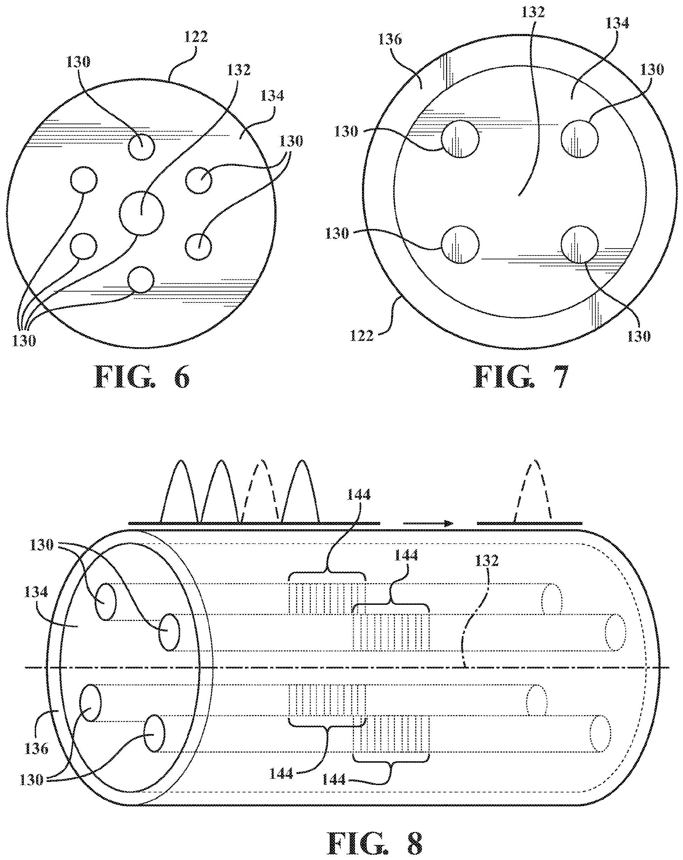

Referring to Figure 6, another embodiment of the optical fiber 122 is shown having seven cores 130 and the cladding material 134. In this embodiment, one of the cores 130 extends along the fiber axis 132 of the optical fiber 122 and has a larger diameter and the remaining six cores 130 are spaced equally about the fiber axis 132. Further, the optical fiber 122 may include the coating material 136, which is not shown. Figure 7 shows another embodiment of the optical fiber 122 that has four cores 130 spaced from one another and the cores 130 extend parallel to each other along the optical fiber 122. The cores 130 are shown having a single cladding material 134 and coating material 136 surrounding the four cores 130.

Figure 8 is a perspective view of the optical fiber 122 shown in Figure 7 and illustrates the light transmitted through one of the cores 130 as waves. In this example, three of the waves are reflected by the sensor 144 and one wave would continue. The optical fiber 122 has the plurality of grating sensors 144 positioned along each of the cores 130 of the optical fiber 122 which may reflect the other waves. The sensors 144 can be located adjacent to or offset from one another. As the optical fiber 122 bends and conforms to the shape of the body parts, the sensors 144 change from stress or strain and can provide bend and shape measurement when multiple cores 130 are interrogated as described above. The same fibers would enable tracking of the precise shape, position and movements of the ATD 102 in real time. One advantage of having the cores 130 placed side by side is that it can be used for bend measurement. Referring back to Figure 6, the centrally located core 130 can be used for measurement or compensation of total strain or temperature because it is along the fiber axis 132 of the fiber.

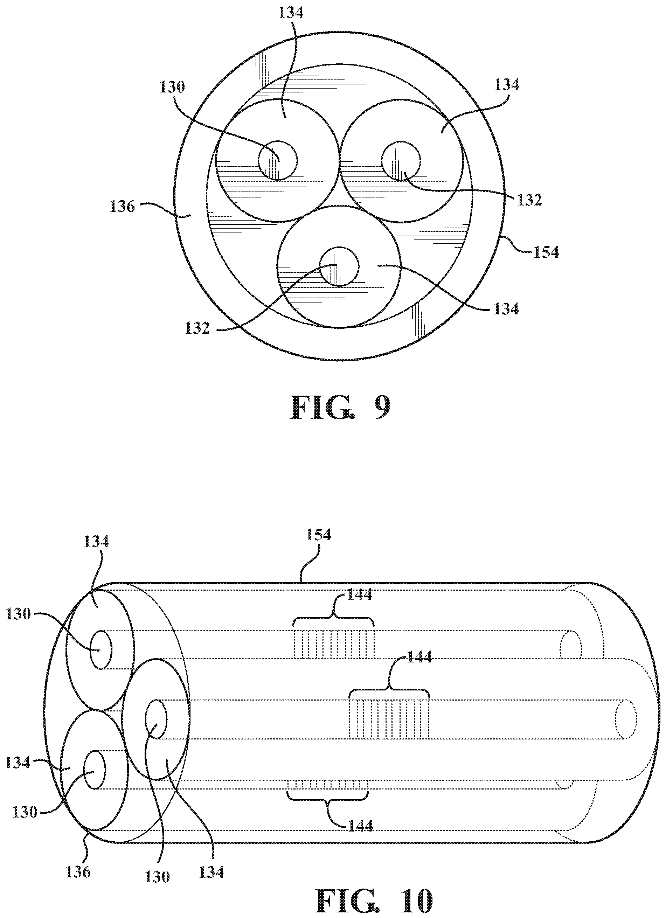

With reference to Figure 9, another embodiment of at least one of the optical fibers 122 is a fiber bundle 154 of collocated optical fibers 122. The fiber bundle 154 includes three collocated optical fibers 122, each having the core 130 and the cladding 134. Figure 10 is a perspective view of the optical fiber 122 shown in Figure 9 illustrating three cores. The bundle can contain multiple collocated fibers or different sections of the same fiber. The collocated fibers 122 can have a single core 130 or multiple cores 130. The collocated optical fibers 122 may be connected to each other by the cladding or any other layers that are included with the optical fiber 122. A suitable adhesive may be used to attach the collocated optical fibers 122 together. Alternatively, the collocated optical fibers 122 may slide freely next to each other.

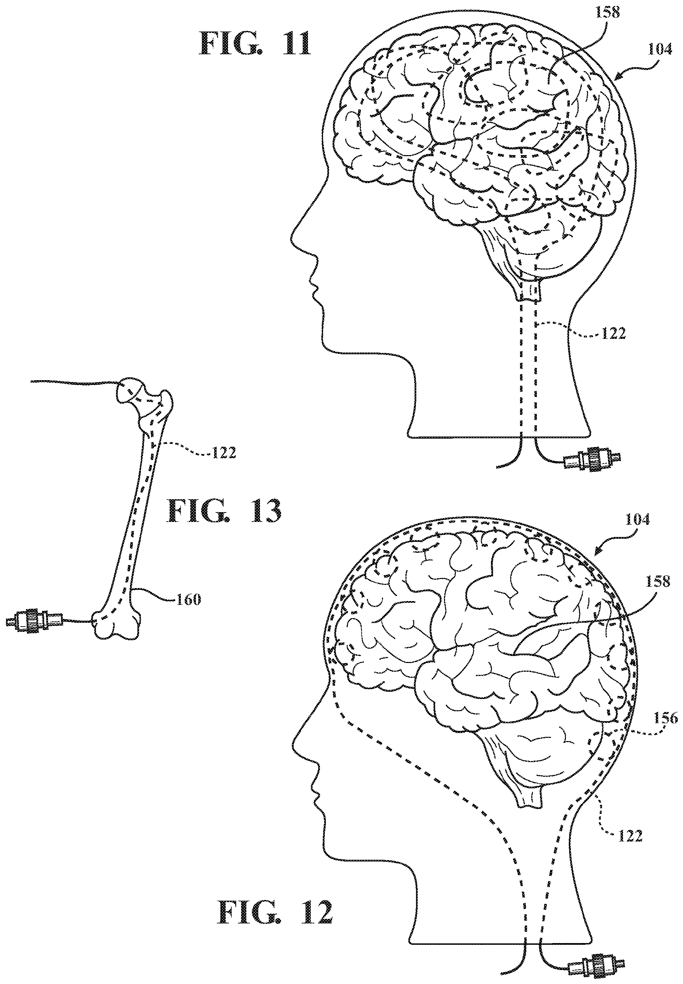

With reference to Figure 11, a schematic representation of a simulated head assembly 104 is shown having the optical fiber 122 positioned therein to detect shape or shape variations in a soft tissue 158 such as a simulated brain. The fiber 122 deforms with the brain model to provide deformation information. Accelerations during crash tests can deform soft tissues causing strain on the optical fiber 122 and the present system 100 would be able to measure this deformation in the ATD 102. The subject invention is capable of undergoing significant deformation in a very short time span, i.e. in an impact simulation. The deformation causes strain on the optical fiber 122 resulting in areas that are stretched and others that are compressed. Further, the system 100 undergoes repeated deformations.

Figure 12 shows another embodiment of the optical fiber 122 embedded within the soft tissue 158. In this embodiment, the optical fiber 122 has a plurality of loops 156 that engage the soft tissue 158 and assist in positioning the soft tissue 158 within the head assembly 104. The sensing occurs at the edges of the soft tissue 158. By fixing part of the fiber 122 to a reference, such as a large bone like the skull, and part to the soft tissue 158, relative position changes could be measured.

Figure 13 is still another embodiment of the subject invention illustrating the fiber 122 in a part of a leg assembly 108, such as simulated bone structure 160, to detect the deformation or shape thereof.

The subject invention allows shape information to be extracted from differential strain measurements from the different cores 130. In one embodiment, the optical fiber 122 has a length that extends through the body parts of the ATD 102. Preferably, each of the body parts can receive its own optical fiber 122. For example, the shape sensing can be used to detect the position of each limb, head, body or organs in relation to the spine or in relation to the surrounding environment which could be a car or a seat.

The sensing system 100 can be attached to parts of the ATD 102 such as neck, spine, joints, internal organs, bones, ribs or any part. Referring back to Figure 1, the optical fiber 122 is placed throughout different parts to monitor the shape thereof by sensing different parts such as torso, limbs and head. Thus, the subject invention allows for the precise positioning of the body part prior to subjecting the ATD 102 to a test or any movements. Once a starting position and orientation of the body parts are known, the body parts can be repositioned in the same position and orientation for subsequent tests. The subject invention also allows for the detection of bending of joints, such as elbows, knees, or neck, before, during, and after a test. The ability to repeatedly place the body parts in the correct or same position before the test and for subsequent test is import and the present invention would considerably aid this operation.

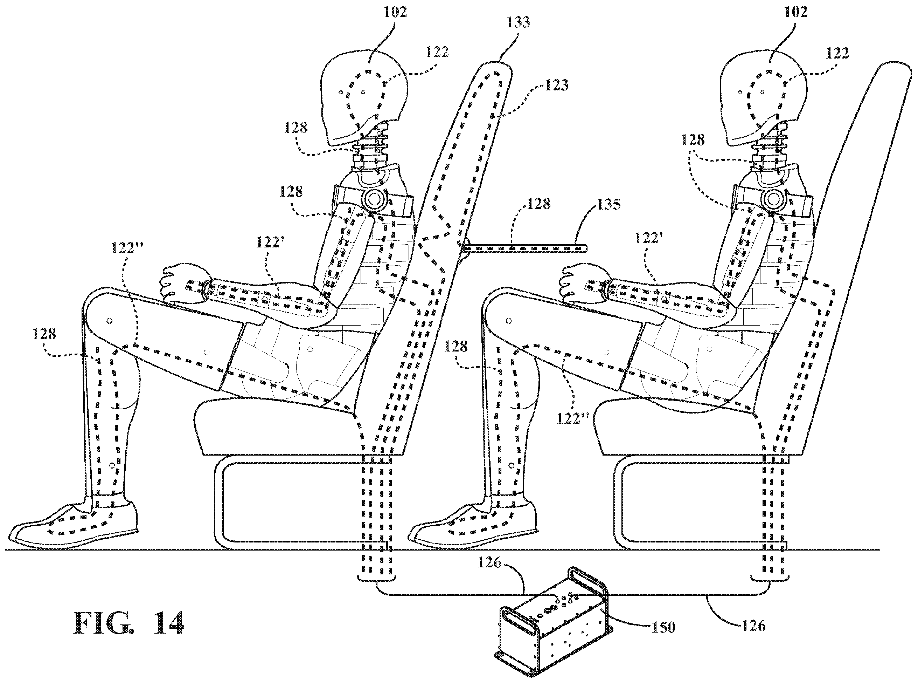

Another embodiment is shown in Figure 14 for use in testing airplane interiors with two ATDs 102, which are the same as shown in Figure 1. Each of the ATDs 102 has first optical fibers 122, 122', 122" extending throughout the body parts. A second optical fiber 123 extends through a seat back 133 and tray table 135. Each of the first optical fibers, 122, 122', 122" and the second optical fiber 123 include the fiber cores 130 with grating sensors 144 as discussed above.

The present invention has been described in an illustrative manner. It is to be understood that the terminology, which has been used, is intended to be in the nature of words of description rather than of limitation.

Many modifications and variations of the present invention are possible in light of the above teachings. Therefore, the present invention may be practiced other than as specifically described.

## Claims

1. A system (100) for detecting forces during a collision test where the system (100) experiences a sudden impact causing deformation in a short time span i.e., an impact simulation, said system (100) comprising:
a plurality of components forming a part of at least one of a vehicle, a testing stand, and/or an anthropomorphic test device (102);
at least one optical fiber (122) mounted directly to a surface of or embedded within at least one of a vehicle and/or an anthropomorphic test device (102) with said optical fiber (122) extending between a first end (126) and a second end (128) or at least one optical fiber (122) supported by and in contact with at least one of a testing stand;
said optical fiber (122) having a plurality of cores (130), preferably at least three cores, extending between said first and said second ends (126, 128), each of said cores (130) having a plurality of grating sensors (144), preferably Fiber Bragg Grating sensors, inscribed integrally therein with said sensors (144) spaced along a length between said first and said second ends (126, 128);
an emitter (148) in communication with said optical fiber (122) for emitting a light having a predetermined band of wavelengths through said plurality of cores (130) of said optical fiber (122) that is reflected by said sensors (144); and
an interrogator (146) in communication with said optical fiber (122) for detecting said reflected light from said plurality of grating sensors (144) such that changes to the reflected light indicate a strain on said optical fiber (122);
wherein said plurality of cores (130) are further defined as being in a spaced and parallel relationship with one another between said first and said second ends (126, 128),
wherein the sudden impact results in deformation of said plurality of components causing strain on said optical fiber (122) that stretches and compresses said grating sensors (144) in deformed areas thereby changing the reflection of the light from each of said plurality of cores (130) that is used to generate deformation information corresponding to deformation of said at least one of said components supporting said optical fiber (122).

2. A system (100) as set forth in claim 1 wherein said optical fiber (122) has a longitudinally extending fiber axis (132) with one of said cores (130) located along said axis (132).

3. A system (100) as set forth in claim 1 wherein said plurality of grating sensors (144) of each of said cores (130) are co-planar with one another.

4. A system (100) as set forth in claim 1 wherein said at least one optical fiber (122) further comprises a fiber bundle (154) of collocated optical fibers (122) adjacent one another with each of said collocated optical fibers (122) having at least one core.

5. A system (100) as set forth in claim 1, wherein said plurality of components is further defined as
a plurality of body parts of an anthropomorphic test device (102) that simulates at least a part of a human body and further comprising a plurality of components forming a part of at least one of a vehicle and a testing stand;
wherein said optical fiber (122) is further defined as at least one first optical fiber (122, 122', 122") mounted directly to a surface of or embedded within at least one of said body parts with said first optical fiber (122, 122', 122") extending between a first end (126) and a second end (128), wherein said optical fiber (122) is further defined as at least one second optical fiber (123) mounted directly to a surface of or embedded within at least one of said components with said second optical fiber (123) extending between a first end (126) and a second end (128);
wherein said emitter (148) is in communication with said first and said second optical fibers (122, 122', 122", 123) for emitting a light having a predetermined band of wavelengths through said plurality of cores (130) of said first and said second optical fibers (122, 122', 122", 123) that is reflected by said sensors (144);
an interrogator (146) in communication with said first and said second optical fibers (122, 122', 122", 123) for detecting said reflected light from said plurality of grating sensors (144) such that changes to the reflected light indicate a strain on said optical fiber (122, 122', 122", 123); and
wherein said plurality of cores (130) of at least one of said first and said second optical fibers (122, 122', 122", 123) are further defined as being in a spaced and parallel relationship with one another between said first and said second ends (126, 128).

6. An anthropomorphic test device (102) that undergoes a sudden impact causing deformation in a short time span i.e., an impact simulation, said anthropomorphic test device (102) comprising:
at least one component simulating at least a part of a human body that may undergo deformation when subjected to the sudden impact;
at least one optical fiber (122) mounted directly to a surface of or embedded within said at least one body part, said optical fiber (122) extending between a first end (126) and a second end (128); and
said optical fiber (122) having a plurality of cores (130), preferably at least three cores, extending between said first and said second ends (126, 128) and each of said cores (130) having a plurality of grating sensors (144), preferably a plurality of Fiber Bragg Grating sensors, inscribed integrally therein with said sensors (144) spaced along a length between said first and said second ends (126, 128); and
wherein said plurality of cores (130) are further defined as being in a spaced and parallel relationship with one another between said first and said second ends (126, 128);
wherein the sudden impact results in deformation of said at least one body part causing strain on said optical fiber (122) that stretches and compresses said grating sensors (144) in deformed areas thereby changing the reflection of the light from each of said plurality of cores (130) that is used to generate deformation information corresponding to deformation of said at least one body part supporting said optical fiber (122).

7. A device as set forth in claim 6 wherein said optical fiber (122) has a longitudinally extending fiber axis (132) with one of said cores (130) located along said axis (132).

8. A device as set forth in claim 6 wherein said at least one optical fiber (122) further comprises a fiber bundle (154) of collocated optical fibers (122) adjacent one another with each of said collocated optical fibers (122) having at least one core (130).

9. A device as set forth in claim 8 wherein said collocated optical fibers (122) are attached to each other.

10. A device as set forth in claim 6 wherein said each of said cores (130) have a same diameter.

11. A device as set forth in claim 6 wherein at least one of said cores (130) has a different diameter of said other cores (130).

12. A device as set forth in claim 6 wherein said each of said cores (130) have has a diameter of from 5 to 20 microns.

13. A device as set forth in claim 6 wherein said at least one body part is further defined as one of a head assembly (104), a leg assembly (108), a rib (124), or a rib cage assembly (120).

## Patentansprüche

1. Ein System (100) zum Erfassen von Kräften während eines Kollisionstests, bei dem das System (100) einen plötzlichen Aufprall erfährt, der eine Verformung in einer kurzen Zeitspanne verursacht, d. h. eine Aufprallsimulation, wobei das System (100) Folgendes beinhaltet:
eine Vielzahl von Komponenten, die einen Teil von mindestens einem von einem Fahrzeug, einem Prüfstand und/oder einer anthropomorphen Testvorrichtung (102) bilden;
mindestens eine optische Faser (122), die direkt an einer Oberfläche von mindestens einem von einem Fahrzeug und/oder einer anthropomorphen Testvorrichtung (102) angebracht oder darin eingebettet ist, wobei sich die optische Faser (122) zwischen einem ersten Ende (126) und einem zweiten Ende (128) erstreckt, oder mindestens eine optische Faser (122), die von mindestens einem von einem Prüfstand getragen wird und damit in Kontakt steht;
wobei die optische Faser (122) eine Vielzahl von Kernen (130), vorzugsweise mindestens drei Kerne, aufweist, die sich zwischen dem ersten und dem zweiten Ende (126, 128) erstrecken, wobei jeder der Kerne (130) eine Vielzahl von Gittersensoren (144), vorzugsweise Faser-Bragg-Gittersensoren, aufweist, die integral darin eingeschrieben sind, wobei die Sensoren (144) entlang einer Länge zwischen dem ersten und dem zweiten Ende (126, 128) beabstandet sind;
einen Emitter (148) in Kommunikation mit der optischen Faser (122) zum Emittieren eines Lichts mit einem vorbestimmten Wellenlängenband durch die Vielzahl von Kernen (130) der optischen Faser (122), das von den Sensoren (144) reflektiert wird; und einen Interrogator (146) in Kommunikation mit der optischen Faser (122) zum Erfassen des reflektierten Lichts von der Vielzahl von Gittersensoren (144), sodass Änderungen des reflektierten Lichts eine Belastung der optischen Faser (122) anzeigen;
wobei die Vielzahl von Kernen (130) ferner als in einer beabstandeten und parallelen Beziehung zueinander zwischen dem ersten und dem zweiten Ende (126, 128) befindlich definiert sind,
wobei der plötzliche Aufprall zu einer Verformung der Vielzahl von Komponenten führt, die eine Belastung der optischen Faser (122) verursacht, die die Gittersensoren (144) in verformten Bereichen dehnt und komprimiert, wodurch die Reflexion des Lichts von jedem der Vielzahl von Kernen (130) geändert wird, die verwendet wird, um Verformungsinformationen zu erzeugen, die einer Verformung der mindestens einen der Komponenten entsprechen, die die optische Faser (122) tragen.

2. System (100) gemäß Anspruch 1, wobei die optische Faser (122) eine sich in Längsrichtung erstreckende Faserachse (132) aufweist, wobei einer der Kerne (130) entlang der Achse (132) liegt.

3. System (100) gemäß Anspruch 1, wobei die Vielzahl von Gittersensoren (144) jedes der Kerne (130) koplanar zueinander sind.

4. System (100) gemäß Anspruch 1, wobei die mindestens eine optische Faser (122) ferner ein Faserbündel (154) von nebeneinander angeordneten optischen Fasern (122) beinhaltet, wobei jede der angeordneten optischen Fasern (122) mindestens einen Kern aufweist.

5. System (100) gemäß Anspruch 1, wobei die Vielzahl von Komponenten ferner wie folgt definiert ist:
als eine Vielzahl von Körperteilen einer anthropomorphen Testvorrichtung (102), die mindestens einen Teil eines menschlichen Körpers simuliert und ferner eine Vielzahl von Komponenten beinhaltet, die einen Teil von mindestens einem von einem Fahrzeug und einem Prüfstand bilden;
wobei die optische Faser (122) ferner als mindestens eine erste optische Faser (122, 122', 122") definiert ist, die direkt an einer Oberfläche von mindestens einem der Körperteile angebracht oder darin eingebettet ist, wobei sich die erste optische Faser (122, 122', 122") zwischen einem ersten Ende (126) und einem zweiten Ende (128) erstreckt, wobei die optische Faser (122) ferner als mindestens eine zweite optische Faser (123) definiert ist, die direkt an einer Oberfläche von mindestens einer der Komponenten angebracht oder darin eingebettet ist, wobei sich die zweite optische Faser (123) zwischen einem ersten Ende (126) und einem zweiten Ende (128) erstreckt;
wobei der Emitter (148) in Kommunikation mit der ersten und der zweiten optischen Faser (122, 122', 122", 123) zum Emittieren eines Lichts mit einem vorbestimmten Wellenlängenband durch die Vielzahl von Kernen (130) der ersten und der zweiten optischen Faser (122, 122', 122", 123) ist, das von den Sensoren (144) reflektiert wird;
einen Interrogator (146) in Kommunikation mit der ersten und der zweiten optischen Faser (122, 122', 122", 123) zum Erfassen des reflektierten Lichts von der Vielzahl von Gittersensoren (144), sodass Änderungen des reflektierten Lichts eine Belastung der optischen Faser (122, 122', 122", 123) anzeigen; und
wobei die Vielzahl von Kernen (130) von mindestens einer von der ersten und der zweiten optischen Faser (122, 122', 122", 123) ferner als in einer beabstandeten und parallelen Beziehung zueinander zwischen dem ersten und dem zweiten Ende (126, 128) befindlich definiert sind.

6. Eine anthropomorphe Testvorrichtung (102), die einen plötzlichen Aufprall erfährt, der eine Verformung in einer kurzen Zeitspanne verursacht, d. h. eine Aufprallsimulation, wobei die anthropomorphe Testvorrichtung (102) Folgendes beinhaltet:
mindestens eine Komponente, die mindestens einen Teil eines menschlichen Körpers simuliert, der eine Verformung erfahren kann, wenn er dem plötzlichen Aufprall ausgesetzt ist;
mindestens eine optische Faser (122), die direkt an einer Oberfläche des mindestens einen Körperteils angebracht oder darin eingebettet ist, wobei sich die optische Faser (122) zwischen einem ersten Ende (126) und einem zweiten Ende (128) erstreckt; und wobei die optische Faser (122) eine Vielzahl von Kernen (130), vorzugsweise mindestens drei Kerne, aufweist, die sich zwischen dem ersten und dem zweiten Ende (126, 128) erstrecken, und jeder der Kerne (130) eine Vielzahl von Gittersensoren (144), vorzugsweise eine Vielzahl von Faser-Bragg-Gittersensoren, aufweist, die integral darin eingeschrieben sind, wobei die Sensoren (144) entlang einer Länge zwischen dem ersten und dem zweiten Ende (126, 128) beabstandet sind; und
wobei die Vielzahl von Kernen (130) ferner als in einer beabstandeten und parallelen Beziehung zueinander zwischen dem ersten und dem zweiten Ende (126, 128) befindlich definiert sind;
wobei der plötzliche Aufprall zu einer Verformung des mindestens einen Körperteils führt, die eine Belastung der optischen Faser (122) verursacht, die die Gittersensoren (144) in verformten Bereichen dehnt und komprimiert, wodurch die Reflexion des Lichts von jedem der Vielzahl von Kernen (130) geändert wird, die verwendet wird, um Verformungsinformationen zu erzeugen, die einer Verformung des mindestens einen Körperteils entsprechen, das die optische Faser (122) trägt.

7. Vorrichtung gemäß Anspruch 6, wobei die optische Faser (122) eine sich in Längsrichtung erstreckende Faserachse (132) aufweist, wobei einer der Kerne (130) entlang der Achse (132) liegt.

8. Vorrichtung gemäß Anspruch 6, wobei die mindestens eine optische Faser (122) ferner ein Faserbündel (154) von nebeneinander angeordneten optischen Fasern (122) beinhaltet, wobei jede der angeordneten optischen Fasern (122) mindestens einen Kern (130) aufweist.

9. Vorrichtung gemäß Anspruch 8, wobei die angeordneten optischen Fasern (122) aneinander befestigt sind.

10. Vorrichtung gemäß Anspruch 6, wobei jeder der Kerne (130) einen gleichen Durchmesser aufweist.

11. Vorrichtung gemäß Anspruch 6, wobei mindestens einer der Kerne (130) einen anderen Durchmesser als die anderen Kerne (130) aufweist.

12. Vorrichtung gemäß Anspruch 6, wobei jeder der Kerne (130) einen Durchmesser von 5 bis 20 Mikrometer aufweist.

13. Vorrichtung gemäß Anspruch 6, wobei der mindestens eine Körperteil ferner als eines von einer Kopfanordnung (104), einer Beinanordnung (108), einer Rippe (124) oder einer Rippenkorbanordnung (120) definiert ist.

## Revendications

1. Un système (100) pour détecter des forces pendant un essai de collision où le système (100) connaît un choc soudain provoquant une déformation dans un court laps de temps, c'est-à-dire, une simulation de choc, ledit système (100) comprenant :
une pluralité de composants formant une partie d'au moins un élément parmi un véhicule, un banc d'essai, et/ou un dispositif d'essai anthropomorphe (102) ;
au moins une fibre optique (122) montée directement sur une surface de ou incorporée dans au moins un élément parmi un véhicule et/ou un dispositif d'essai anthropomorphe (102) avec ladite fibre optique (122) qui s'étend entre une première extrémité (126) et une deuxième extrémité (128) ou au moins une fibre optique (122) supportée par et en contact avec au moins un élément parmi un banc d'essai ;
ladite fibre optique (122) ayant une pluralité de cœurs (130), de préférence au moins trois cœurs, s'étendant entre lesdites première et deuxième extrémités (126, 128), chacun desdits cœurs (130) ayant une pluralité de capteurs de réseau (144), de préférence des capteurs de réseau de Bragg sur fibre, inscrits intégralement dans celui-ci avec lesdits capteurs (144) espacés sur une longueur entre lesdites première et deuxième extrémités (126, 128) ;
un émetteur (148) en communication avec ladite fibre optique (122) pour émettre une lumière ayant une bande prédéterminée de longueurs d'onde à travers ladite pluralité de cœurs (130) de ladite fibre optique (122) qui est réfléchie par lesdits capteurs (144) ; et
un interrogateur (146) en communication avec ladite fibre optique (122) pour détecter ladite lumière réfléchie depuis ladite pluralité de capteurs de réseau (144) de sorte que des changements de la lumière réfléchie indiquent une contrainte sur ladite fibre optique (122) ;
dans lequel ladite pluralité de cœurs (130) sont en outre définis comme étant dans une relation espacée et parallèle les uns par rapport aux autres entre lesdites première et deuxième extrémités (126, 128),
dans lequel le choc soudain résulte en une déformation de ladite pluralité de composants provoquant une contrainte sur ladite fibre optique (122) qui étire et comprime lesdits capteurs de réseau (144) dans des zones déformées changeant ainsi la réflexion de la lumière depuis chacun de ladite pluralité de cœurs (130) qui est utilisée pour générer des informations de déformation correspondant à une déformation dudit au moins un desdits composants supportant ladite fibre optique (122).

2. Un système (100) tel qu'énoncé dans la revendication 1 dans lequel ladite fibre optique (122) a un axe de fibre s'étendant longitudinalement (132) avec l'un desdits cœurs (130) localisé le long dudit axe (132).

3. Un système (100) tel qu'énoncé dans la revendication 1 dans lequel ladite pluralité de capteurs de réseau (144) de chacun desdits cœurs (130) sont coplanaires les uns par rapport aux autres.

4. Un système (100) tel qu'énoncé dans la revendication 1 dans lequel ladite au moins une fibre optique (122) comprend en outre un faisceau de fibres (154) de fibres optiques colocalisées (122) adjacentes les unes aux autres avec chacune desdites fibres optiques colocalisées (122) qui a au moins un cœur.

5. Un système (100) tel qu'énoncé dans la revendication 1, dans lequel ladite pluralité de composants est en outre définie comme
une pluralité de parties de corps d'un dispositif d'essai anthropomorphe (102) qui simule au moins une partie d'un corps humain et comprenant en outre une pluralité de composants formant une partie d'au moins un élément parmi un véhicule et un banc d'essai ;
dans lequel ladite fibre optique (122) est en outre définie comme au moins une première fibre optique (122, 122', 122") montée directement sur une surface de ou incorporée dans au moins une desdites parties de corps avec ladite première fibre optique (122, 122', 122") qui s'étend entre une première extrémité (126) et une deuxième extrémité (128), dans lequel ladite fibre optique (122) est en outre définie comme au moins une deuxième fibre optique (123) montée directement sur une surface de ou incorporée dans au moins un desdits composants avec ladite deuxième fibre optique (123) qui s'étend entre une première extrémité (126) et une deuxième extrémité (128) ;
dans lequel ledit émetteur (148) est en communication avec lesdites première et deuxième fibres optiques (122, 122', 122", 123) pour émettre une lumière ayant une bande prédéterminée de longueurs d'onde à travers ladite pluralité de cœurs (130) desdites première et deuxième fibres optiques (122, 122', 122", 123) qui est réfléchie par lesdits capteurs (144) ;
un interrogateur (146) en communication avec lesdites première et deuxième fibres optiques (122, 122', 122", 123) pour détecter ladite lumière réfléchie depuis ladite pluralité de capteurs de réseau (144) de sorte que des changements de la lumière réfléchie indiquent une contrainte sur ladite fibre optique (122, 122', 122", 123) ; et dans lequel ladite pluralité de cœurs (130) d'au moins une desdites première et deuxième fibres optiques (122, 122', 122", 123) sont en outre définis comme étant dans une relation espacée et parallèle les uns par rapport aux autres entre lesdites première et deuxième extrémités (126, 128).

6. Un dispositif d'essai anthropomorphe (102) qui subit un choc soudain provoquant une déformation dans un court laps de temps, c'est-à-dire, une simulation de choc, ledit dispositif d'essai anthropomorphe (102) comprenant :
au moins un composant simulant au moins une partie d'un corps humain qui peut subir une déformation lorsqu'il est soumis au choc soudain ;
au moins une fibre optique (122) montée directement sur une surface de ou incorporée dans ladite au moins une partie de corps, ladite fibre optique (122) s'étendant entre une première extrémité (126) et une deuxième extrémité (128) ; et
ladite fibre optique (122) ayant une pluralité de cœurs (130), de préférence au moins trois cœurs, qui s'étendent entre lesdites première et deuxième extrémités (126, 128) et chacun desdits cœurs (130) ayant une pluralité de capteurs de réseau (144), de préférence une pluralité de capteurs de réseau de Bragg sur fibre, inscrits intégralement dans celui-ci avec lesdits capteurs (144) espacés sur une longueur entre lesdites première et deuxième extrémités (126, 128) ; et
dans lequel ladite pluralité de cœurs (130) sont en outre définis comme étant dans une relation espacée et parallèle les uns par rapport aux autres entre lesdites première et deuxième extrémités (126, 128) ;
dans lequel le choc soudain résulte en une déformation de ladite au moins une partie de corps provoquant une contrainte sur ladite fibre optique (122) qui étire et comprime lesdits capteurs de réseau (144) dans des zones déformées changeant ainsi la réflexion de la lumière depuis chacun de ladite pluralité de cœurs (130) qui est utilisée pour générer des informations de déformation correspondant à une déformation de ladite au moins une partie de corps supportant ladite fibre optique (122).

7. Un dispositif tel qu'énoncé dans la revendication 6 dans lequel ladite fibre optique (122) a un axe de fibre s'étendant longitudinalement (132) avec l'un desdits cœurs (130) localisé le long dudit axe (132).

8. Un dispositif tel qu'énoncé dans la revendication 6 dans lequel ladite au moins une fibre optique (122) comprend en outre un faisceau de fibres (154) de fibres optiques colocalisées (122) adjacentes les unes aux autres avec chacune desdites fibres optiques colocalisées (122) qui a au moins un cœur (130).

9. Un dispositif tel qu'énoncé dans la revendication 8 dans lequel lesdites fibres optiques colocalisées (122) sont attachées les unes aux autres.

10. Un dispositif tel qu'énoncé dans la revendication 6 dans lequel lesdits chacun desdits cœurs (130) ont un même diamètre.

11. Un dispositif tel qu'énoncé dans la revendication 6 dans lequel au moins l'un desdits cœurs (130) a un diamètre différent desdits autres cœurs (130).

12. Un dispositif tel qu'énoncé dans la revendication 6 dans lequel lesdits chacun desdits cœurs (130) ont un diamètre allant de 5 à 20 microns.

13. Un dispositif tel qu'énoncé dans la revendication 6 dans lequel ladite au moins une partie de corps est en outre définie comme un élément parmi un ensemble de tête (104), un ensemble de jambe (108), une côte (124), ou un ensemble de cage thoracique (120).
